# EUROPEAN PATENT SPECIFICATION

(11) **EP 1 785 606 B1**
(45) Date of publication and mention of the grant of the patent: **11.06.2014**
(21) Application number: 04772696.3
(22) Date of filing: 02.09.2004
(51) Int. Cl.: F01N 3/08, F01N 3/36, F01N 3/20, F01N 5/02

(54) **EXHAUST GAS PURIFIER**
ABGASREINIGUNGSVORRICHTUNG
ÉPURATEUR DE GAZ D'ÉCHAPPEMENT

(43) Date of publication of application: 16.05.2007
(73) Proprietor: Nissan Diesel Motor Co., Ltd., Ageo-shi Saitama 362-8523 (JP)
(72) Inventor: Hirata, Kiminobu, Nissan Diesel Motor Co., Ltd., Saitama, 3628523 (JP)
(74) Representative: Driver, Virginia Rozanne
(86) International application number: PCT/JP2004/012747
(87) International publication number: WO 2006/025110

(56) References cited:
- WO-A1-00/09869
- DE-A1- 10 306 134
- JP-A- 2002 332 827
- JP-A- 2004 003 445
- JP-A- 2004 044 405

## Description

### Technical Field

The present invention relates generally to an apparatus for reducing and purifying nitrogen oxides (NOx) in an exhaust gas exhausted from diverse kinds of power generators such as, for example, a vehicle engine and so forth, and more particularly to a technology for enhancing efficiency of hydrolysis of a urea aqueous solution used as a reducing agent in the exhaust gas purifying apparatus in order for reducing and purifying NOx component in an exhaust gas exhausted from an engine.

### Background Art

Japanese Unexamined Patent Publication No. 2000-27627 (Patent Document 1: JP-A-2000-027627) discloses a conventional exhaust gas purifying apparatus for reducing and purifying NOx included in the exhaust gas exhausted from an engine. In this exhaust gas purifying apparatus, a NOx reducing catalytic converter is disposed in an exhaust passage of the engine so as to convert NOx into harmless nitrogen (N₂), oxygen (O₂), and the like in an oxygen-excessive atmosphere. Moreover, in order to enhance NOx purifying efficiency in the NOx reducing catalytic converter, a configuration for injecting and adding a urea aqueous solution into an exhaust pipe positioned on the exhaust upstream side of the catalytic converter is employed. The urea aqueous solution injected and added into the exhaust pipe is hydrolyzed to ammonia by exhaust heat and water vapor in the exhaust gas and is supplied in a flow of the exhaust gas toward the NOx reducing catalytic converter. Then, in the NOx reducing catalytic converter, the ammonia is used as a reducing agent to reduce and purify the NOx in the exhaust gas.

### Patent Document 1: JP-A-2000-027627

WO 00/09869 discloses a device comprising an exhaust gas duct for guiding exhaust gas, an injection device for injecting a reactant into the exhaust gas and at least one built-in catalyst mounted in the exhaust gas duct. An injection chamber and a downstream mixture chamber for mixing the injected reactant with the exhaust gas are embodied in the form of a silencer.

### Disclosure of the Invention

### Problems to be Solved by the Invention

In such an exhaust gas purifying apparatus, a part of the urea aqueous solution injected and added into the exhaust pipe adheres to an inner wall of the exhaust pipe and forms liquid droplets on the surface of the inner wall. Because an outer wall of the exhaust pipe is in contact with the atmospheric air and is at a low temperature as compared with the exhaust gas, the liquid droplets formed on the inner wall by the urea aqueous solution are not sufficiently heated and become difficult to hydrolyze to the ammonia. For this reason, there is a possibility that the ammonia to be supplied to the NOx reducing catalytic converter becomes insufficient so that the NOx purifying efficiency must be reduced. A person skilled in the art might conceive to increase an amount of the urea aqueous solution so as to be additionally injected into the NOx for the purpose of solving such a problem. In this case, however, there might be possibilities that a consumption of the urea aqueous solution increases to reduce cost efficiency and that the urea aqueous solution that has not been hydrolyzed is deposited inside the exhaust pipe or emitted as it is into the atmosphere.

Therefore, in view of the above problems or defects which might be encountered by the conventional technology, it is an object of the present invention to provide a novel technology applicable to an exhaust gas purifying apparatus, in which efficiency of hydrolysis where ammonia is produced from a urea aqueous solution is enhanced by suppressing decrease of the temperature of the urea aqueous solution that has formed liquid droplets.

### Means for Solving the Problems

To achieve the object, in accordance with the present invention, there is provided an exhaust gas purifying apparatus, which Includes: an exhaust pipe capable of permitting an exhaust gas to flow therein from an upstream side to a downstream side, a nitrogen oxide (NOx) reducing catalytic converter disposed in the exhaust pipe to reduce and purify nitrogen oxides in the exhaust gas; an internal tubular member disposed on an exhaust upstream side of the NOx reducing catalytic converter while leaving a clearance between the internal tubular member and an inner wall of the exhaust pipe and having open opposite ends spaced apart from each other in a direction along a flow of the exhaust gas ; a storage tank for storing therein a urea aqueous solution; and an injection nozzle for additively injecting the urea aqueous solution supplied from the storage tank into the exhaust gas in a direction along the flow of the exhaust gas within the internal tubular member, the exhaust gas purifying apparatus characterised in that the internal tubular member is supported substantially concentrically within the exhaust pipe by two support plates wherein each of the support plates has multiple holes for allowing exhaust gas flowing through the exhaust pipe to flow on inner and outer sides of the internal tubular member.

Preferably, a heating device is further provided for heating the urea aqueous solution to be additively injected within the internal tubular member. Here, as a heat source of the heating device, an electric heater, a coolant for cooling an engine, or the exhaust gas per se that has passed through the nitrogen oxide reducing catalytic converter may be used for heating the urea aqueous solution stored in the storage tank or the urea aqueous solution in piping that provides a fluid connection between the storage tank and the injection nozzle. Further, in order to efficiently heat the urea aqueous solution to minimize energy consumption, it is preferable to provide a heat insulator for suppressing radiation of heat from the urea aqueous solution heated by the heating device into the atmospheric air.

A further preferably, there may be provided an operating state detecting device configured to detect an operating state of the engine and an addition controlling device configured to control an addition flow rate of the urea aqueous solution to be additively injected from the injection nozzle based on the operating state detected by the operating state detecting device.

### Effects of the Invention

With the exhaust gas purifying apparatus according to the invention, the internal tubular member is heated from outside and inside by the exhaust gas flowing through the exhaust pipe, and temperature of the internal tubular member rises to substantially the same temperature as that of the exhaust gas in an extremely short time. Therefore, temperature of the urea aqueous solution additively injected into the internal tubular member does not decrease even if the solution adheres to an inner wall of the internal tubular member to form liquid droplets, to thereby enhance efficiency of hydrolysis of the urea aqueous solution. Since the efficiency of the hydrolysis of the urea aqueous solution is enhanced, the ammonia to be supplied to the nitrogen oxide reducing catalytic converter does not become insufficient and enhancement of the purifying efficiency of the nitrogen oxides (NOx) can be achieved.

Moreover, if the additive flow rate of the urea aqueous solution to be additively injected from the injection nozzle is controlled based on the operating state of the engine, a just enough required amount of the urea aqueous solution according to the operating state of the engine may be additively injected. Therefore, it is possible to minimize a consumption of the urea aqueous solution while maintaining a necessary level of purifying efficiency of the nitrogen oxides.

### Brief Description of the Drawings

FIG. 1 is a block diagram of a first embodiment of an exhaust gas purifying apparatus according to the present invention.
FIG. 2 is a detail view of a vicinity of an injection nozzle.
FIG. 3 is a block diagram of a second embodiment of the exhaust gas purifying apparatus according to the invention.
FIG. 4 is a block diagram of a third embodiment of the exhaust gas purifying apparatus according to the invention.
FIG. 5 is a block diagram of a fourth embodiment of the exhaust gas purifying apparatus according to the invention.

### Explanation of Reference Symbols

- 1: engine
- 2: exhaust pipe
- 3: NOx reducing catalytic converter
- 4: storage tank
- 10: injection nozzle
- 11: electric heater
- 12: heat insulator
- 13: urea aqueous solution addition control unit
- 14: engine control unit
- 20: internal tubular member
- 22: piping

### Best Modes for Carrying Out the invention

The present invention will be described hereinbelow in more detail with reference to the accompanying drawings

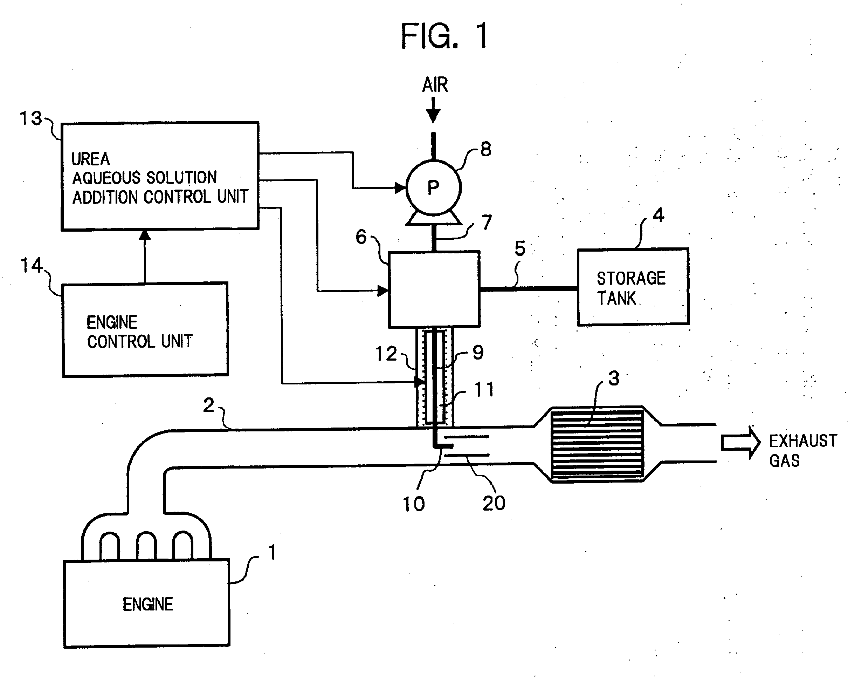

Figure 1 shows a first embodiment of an exhaust gas purifying apparatus according to the invention.

In an exhaust pipe 2 forming an exhaust passage of an engine 1, a NOx reducing catalytic converter 3 for reducing and purifying NOx is disposed. The NOx reducing catalytic converter 3 is formed by supporting a zeolite active component, for example, on a monolith-type catalyst carrier made of ceramic cordierite or Fe-Cr-Al heat resisting steel and having a honeycomb-shaped cross section. The active component supported on the catalyst carrier is activated when ammonia as a reducing agent is supplied, and effectively converts NOx to harmless substances.

The exhaust gas purifying apparatus is provided with a storage tank 4 for storing a urea aqueous solution. The storage tank 4 is connected to a urea aqueous solution adding device 6 through piping 5. On the other hand, the urea aqueous solution adding device 6 is connected to a pump 8 through piping 7. The pump 8 pressurizes air and supplies the pressurized air to the urea aqueous solution adding device 6. The urea aqueous solution adding device 6 is connected to an injection nozzle 10 provided in the exhaust pipe 2 positioned on an exhaust upstream side of the NOx reducing catalytic converter 3 through piping 9, and mixes the urea aqueous solution into the pressurized air from the pump 8 to supply the mixture to the injection nozzle 10.

Around the piping 9 connecting the urea aqueous solution adding device 6 and the injection nozzle 10, an electric heater 11 as a heating device is provided and a heat insulator 12 is provided around the electric heater 11.

Furthermore, a urea aqueous solution addition control unit 13 including a computer and functioning as an addition controlling device is provided. The urea aqueous solution addition control unit 13 can receive a signal of an engine operating state outputted from an engine control unit 14 for controlling the engine 1 through a controller area network (CAN), and controls actuation of the urea aqueous solution adding device 6, the pump 8, and the electric heater 11, respectively. It is also possible to obtain the engine operating state from various sensors for detecting a rotating speed, an intake air flow rate, a load, and the like of the engine. Here; the engine control unit 14 or the various sensors correspond(s) to an operating state detecting device.

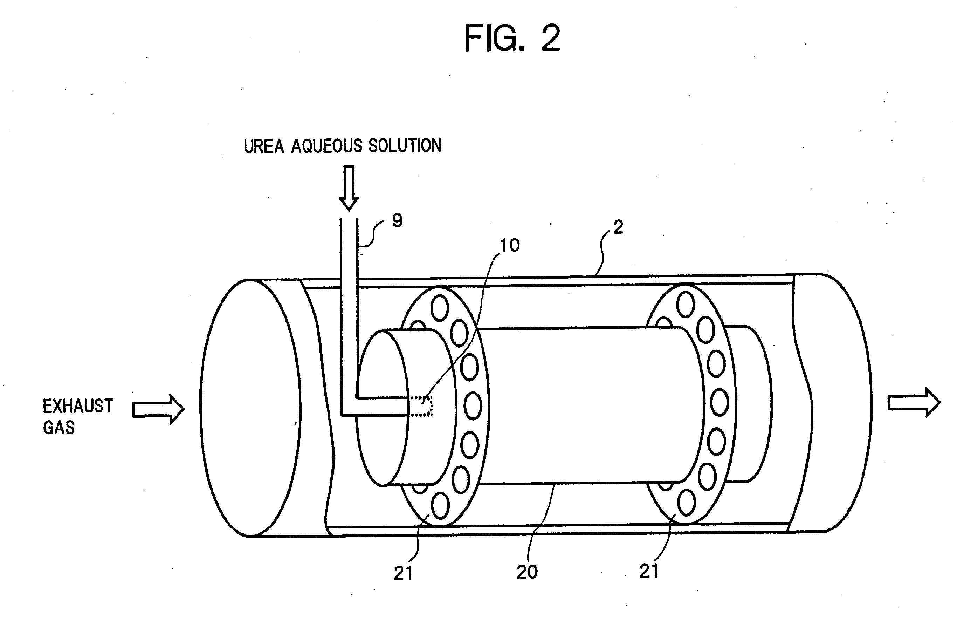

Here, with reference to Fig. 2, a specific configuration near the injection nozzle 10 will be described.

In the exhaust pipe 2 on the exhaust upstream side of the NOx reducing catalytic converter 3, a cylindrical internal tubular member 20 with open opposite ends is provided along the flow of the exhaust gas. The internal tubular member 20 is supported substantially concentrically with the exhaust pipe 2 by two annular-plate-shaped support plates 21 provided in the exhaust pipe 2 while leaving a clearance between the internal tubular member 20 and an inner wall of the exhaust pipe 2. Each of the support plates 21 has a large number of holes. Therefore, the exhaust gas flowing through the exhaust pipe 2 is able to flow on inner and outer sides of the internal tubular member 20. The injection nozzle 10 connected to an extreme end of the piping 9 can inject and add the urea aqueous solution along the flow of the exhaust gas in the internal tubular member 20.

Next, operation of the exhaust gas purifying apparatus will be described.

As the engine 1 is brought into operation, the exhaust gas of the engine 1 is exhausted into the exhaust pipe 2. At this time, the urea aqueous solution addition control unit 13 receives the operating states such as the rotating speed, the intake air flow rate, the load, and the like of the engine 1 from the engine control unit 14. Then, the urea aqueous solution addition control unit 13 calculates an addition flow rate of the urea aqueous solution required to reduce and purify the NOx in the exhaust gas based on the received operating states, and controls actuation of the urea aqueous solution adding device 6, the pump 8, and the electric heater 11, respectively. As a result, the urea aqueous solution is mixed with air and passes through the piping 9 to thereby be heated by the electric heater 11 and injected and added from the injection nozzle 10 into the internal tubular member 20.

The urea aqueous solution injected and added from the injection nozzle 10 is hydrolyzed to ammonia by the exhaust heat and the water vapor in the exhaust gas, and is supplied to the NOx reducing catalytic converter 3 together with the exhaust gas. Then, in the NOx reducing catalytic converter 3, the NOx in the exhaust gas are reduced and purified by using the ammonia as the reducing agent.

At this time, because the urea aqueous solution is heated by the electric heater 11 before it is injected and added, the solution is injected and added into the exhaust pipe 2 after temperature thereof has been increased. Therefore, the decrease in temperature of the exhaust gas due to injection and addition of a low-temperature urea aqueous solution is suppressed. As a result, catalytic reaction in the NOx reducing catalytic converter 3 is maintained active, and the NOx are reduced and purified efficiently. Moreover, because only the additively injected urea aqueous solution, i.e., a minimum necessary amount of the urea aqueous solution is heated, an amount of energy necessary for heating the urea aqueous solution can be suppressed.

Further, because the exhaust gas flows also on the outer side of the internal tubular member 20, temperature of the internal tubular member 20 rises to substantially the same temperature as that of the exhaust gas in an extremely appreciably short time. Accordingly, the urea aqueous solution additively injected from the injection nozzle 10 receives heat from the internal tubular member 20 and is heated even if it adheres to the inner wall of the internal tubular member 20. Therefore, the temperature of the urea aqueous solution does not decrease even if the solution adheres to the inner wall of the internal tubular member 20 and forms liquid droplets. Thus, the hydrolysis is carried out efficiently, and consequently, the ammonia to be supplied to the NOx reducing catalytic converter 3 does not become insufficient and the NOx in the exhaust gas are reduced and purified efficiently.

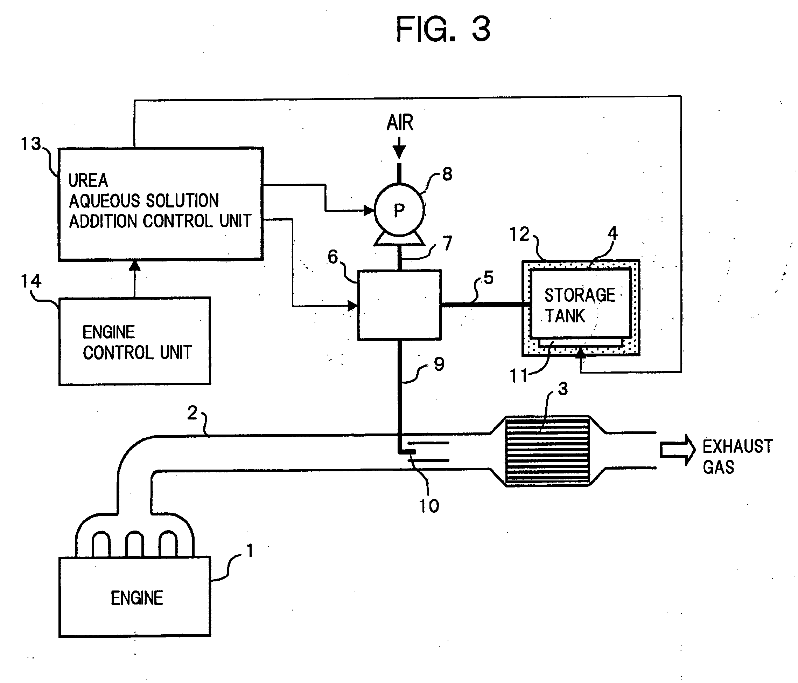

Figure 3 shows a second embodiment of the exhaust gas purifying apparatus according to the invention. Because a basic configuration of the exhaust gas purifying apparatus of the present embodiment is the same as that in the previous first embodiment, only differences will be described (hereafter the same shall apply).

In the present embodiment, in order to heat the urea aqueous solution stored in the storage tank 4, a configuration is employed in which the electric heater 11 and the heat insulator 12 for heating and keeping the heat in the urea aqueous solution are provided around the storage tank 4. In this way, in addition to the operation and effects of the first embodiment, efficiency of the hydrolysis of the urea aqueous solution can be stabilized because the urea aqueous solution at a substantially constant temperature is added into the exhaust gas even if the additive flow rate of the solution per se varies.

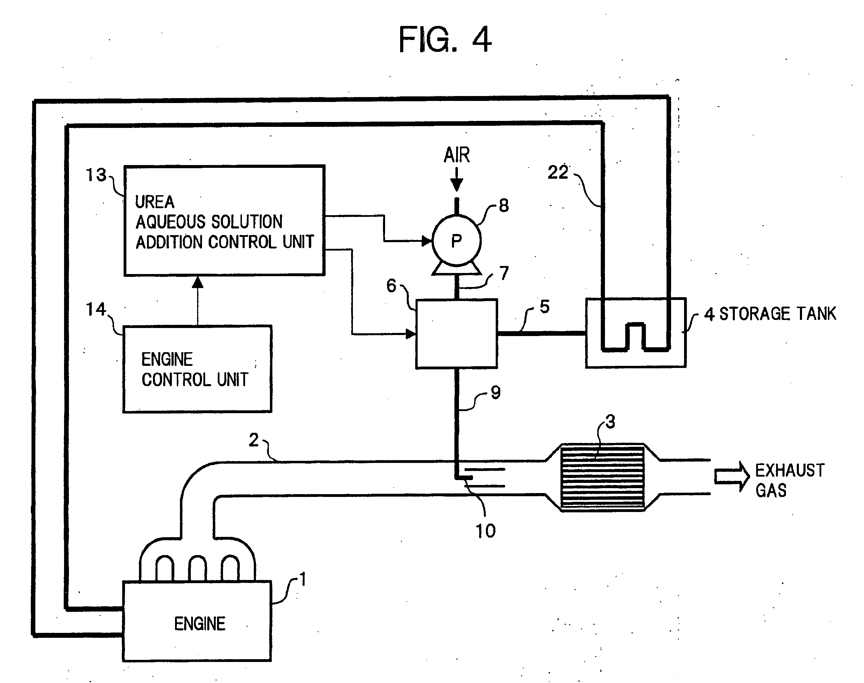

Figure 4 shows a third embodiment of the exhaust gas purifying apparatus according to the invention.

In the embodiment, in order to heat the urea aqueous solution stored in the storage tank 4 by a coolant of the engine 1, a configuration in which piping 22 for the coolant is made to pass through the storage tank 4 is employed. In this way, without using the electric heater, the urea aqueous solution stored in the storage tank 4 is heated and the temperature of the solution is increased by utilizing waste heat. Accordingly, it is possible to suppress an energy consumption required to increase the temperature of the urea aqueous solution. In the embodiment, the piping 22 corresponds to the heating device.

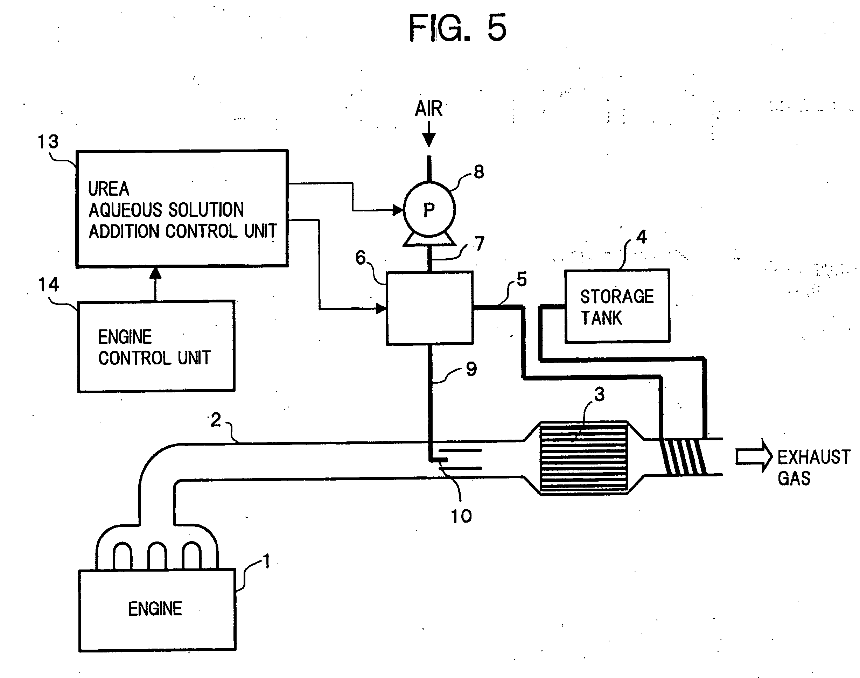

Figure 5 shows a fourth embodiment of the exhaust gas purifying apparatus according to the invention.

In the embodiment, in order to heat the urea aqueous solution to be supplied to the urea aqueous solution adding device 6, a configuration is employed in which an intermediate portion of the piping 5 connecting the storage tank 4 and the urea aqueous solution adding device 6 is wound around the exhaust pipe 2 positioned on the exhaust downstream side of the NOx reducing catalytic converter 3. In this way, without using the electric heater, the urea aqueous solution flowing through the piping 5 can receive heat from the exhaust gas flowing through the exhaust pipe 2 and the temperature of the solution is increased by utilizing wasted heat. Therefore, it is able to suppress the energy consumption required to increase the temperature of the urea aqueous solution. At this time, because the exhaust heat on the exhaust downstream side of the NOx reducing catalytic converter 3 is utilized, the temperature of the exhaust gas supplied to the NOx reducing catalytic converter 3 is not reduced and the NOx purifying efficiency is not reduced.

As the exhaust gas purifying apparatus, the first through fourth embodiments may be used not only separately but also in proper combination. In each embodiment, it is also possible to use a pump for pressurizing the urea aqueous solution instead of the urea aqueous solution adding device 6, to directly inject and add the pressurized urea aqueous solution from the injection nozzle 10. In this way, the pump for pressurizing and supplying the air becomes unnecessary. In this case, actuation of the pump for pressurizing the urea aqueous solution may be controlled by the urea aqueous solution addition control unit 13 to control the addition flow rate of the urea aqueous solution.

### Industrial Applicability

As described above, the exhaust gas purifying apparatus according to the invention is extremely useful because the decrease of temperature of the urea aqueous solution injected and added into the exhaust gas is suppressed and the efficiency of the hydrolysis where the ammonia is produced is enhanced to thereby prevent a shortage of the ammonia to be supplied to the nitrogen oxide reducing catalytic converter to facilitate reduction and purifying of the nitrogen oxides.

## Claims

1. An exhaust gas purifying apparatus comprising:
a nitrogen oxide reducing catalytic converter (3) configured to reduce and purify nitrogen oxides in an exhaust gas, the nitrogen oxide reducing catalytic converter (3) being disposed in an exhaust pipe (2) which allows the exhaust gas to flow from upstream side toward downstream side thereof;
an internal tubular member (20) disposed on an exhaust upstream side of the nitrogen oxide reducing catalytic converter (3) while leaving a clearance between the internal tubular member (20) and an inner wall of the exhaust pipe (2), the internal tubular member (20) having open opposite ends spaced apart from one another in a direction along a flow of the exhaust gas;
a storage tank (4) configured to store a urea aqueous solution; and
an injection nozzle (10) configured to additively inject the urea aqueous solution supplied from the storage tank in the direction along the flow of the exhaust gas within the internal tubular member (20),
the exhaust gas purifying apparatus **characterised in that** the internal tubular member (20) is supported substantially concentrically within the exhaust pipe (2) by two support plates (21) wherein each of the support plates (21) has multiple holes for allowing exhaust gas flowing through the exhaust pipe (2) to flow on inner and outer sides of the internal tubular member (20).

2. The exhaust gas purifying apparatus according to claim 1, further comprising a heating device (11) that heats the urea aqueous solution which is to be additively injected within the internal tubular member (20).

3. The exhaust gas purifying apparatus according to claim 2, wherein the heating device (11) heats the urea aqueous solution stored in the storage tank (4).

4. The exhaust gas purifying apparatus according to claim 2, wherein the heating device (11) heats the urea aqueous solution existing in a piping arranged for providing a fluid connection between the storage tank (4) and the injection nozzle (10).

5. The exhaust gas purifying apparatus according to claim 2, wherein the heating device (11) is an electric heater.

6. The exhaust gas purifying apparatus according to claim 2, wherein the apparatus is applied to an engine (1) having the exhaust pipe (2), and the heating device heats the urea aqueous solution by using a coolant for cooling the engine (1).

7. The exhaust gas purifying apparatus according to claim 2, wherein the heating device heats the urea aqueous solution by utilizing the exhaust gas that has passed through the nitrogen oxide reducing catalytic converter (3).

8. The exhaust gas purifying apparatus according to claim 2, further comprising a heat insulator (12) for suppressing radiation of heat from the urea aqueous solution heated by the heating device (11) toward an atmospheric air.

9. The exhaust gas purifying apparatus according to claim 1, further comprising:
an operating state detecting device (14) configured to detect an operating state of an engine (1); and
an addition controlling device (13) configured to control an additive flow rate of the urea aqueous solution to be injected from the injection nozzle (10) in response to the operating state detected by the operating state detecting device (14).

## Patentansprüche

1. Eine Abgasreinigungsvorrichtung, die Folgendes umfasst:
einen stickoxidreduzierenden Katalysator (3), der konfiguriert ist, um Stickoxide in Abgasen zu reduzieren und Abgase von Stickoxiden zu reinigen, wobei der stickoxidreduzierende Katalysator (3) in einem Auspuffrohr (2) angeordnet ist, das das Abgas von der Anströmseite zur seiner Abströmseite fließen lässt;
ein internes rohrförmiges Element (20), das auf einer Abgasanströmseite des stickoxidreduzierenden Katalysators (3) angeordnet ist, wobei zwischen dem internen rohrförmigen Element (20) und einer Innenwand des Auspuffrohrs (2) ein Abstand gelassen wird und die entgegen gesetzten Enden des internen rohrförmigen Elements (20) in einer einer Abgasströmung entsprechenden Richtung voneinander beabstandet sind;
einen Vorratsbehälter (4), der zum Speichern einer wässrigen Harnstofflösung konfiguriert ist; und
eine Einspritzdüse (10), die zum additiven Einspritzen der vom Vorratsbehälter zugeführten wässrigen Harnstofflösung in einer der Abgasströmung innerhalb des internen rohrförmigen Elements (20) entsprechenden Richtung konfiguriert ist,
wobei die Abgasreinigungsvorrichtung **dadurch gekennzeichnet ist, dass** das interne rohrförmige Element (20) innerhalb des Auspuffrohrs (2) von zwei Stützblechen (21) wesentlich konzentrisch getragen wird, die jeweils mehrere Löcher aufweisen, damit das durch das Auspuffrohr (2) strömende Abgas an Innen- und Außenseiten des internen rohrförmigen Elements (20) fließen kann.

2. Die Anspruch 1 entsprechende Abgasreinigungsvorrichtung, die ferner ein Heizgerät (11) zum Erhitzen der wässrigen Harnstofflösung umfasst, die innerhalb des internen rohrförmigen Elements (20) additiv eingespritzt werden soll.

3. Die Anspruch 2 entsprechende Abgasreinigungsvorrichtung, wobei die im Vorratsbehälter (4) gespeicherte wässrige Harnstofflösung vom Heizgerät (11) erhitzt wird.

4. Die Anspruch 2 entsprechende Abgasreinigungsvorrichtung, wobei das Heizgerät (11) die wässrige Harnstofflösung erhitzt, die sich in einer Rohrleitung befindet, die eine Flüssigkeitsverbindung zwischen dem Vorratsbehälter (4) und der Einspritzdüse (10) herstellt.

5. Die Anspruch 2 entsprechende Abgasreinigungsvorrichtung, wobei das Heizgerät (11) ein Elektroheizer ist.

6. Die Anspruch 2 entsprechende Abgasreinigungsvorrichtung, wobei diese Vorrichtung für einen Motor (1) mit dem Auspuffrohr (2) angewendet wird und das Heizgerät die wässrige Harnstofflösung anhand eines Kühlmittels erhitzt, das der Kühlung des Motors (1) dient.

7. Die Anspruch 2 entsprechende Abgasreinigungsvorrichtung, wobei das Heizgerät die wässrige Harnstofflösung anhand des Abgases erhitzt, das durch den stickoxidreduzierenden Katalysator (3) geströmt ist.

8. Die Anspruch 2 entsprechende Abgasreinigungsvorrichtung, die ferner einen Wärmeisolator (12) umfasst, um die von der wässrigen Harnstofflösung nach Erhitzung durch das Heizgerät (11) zur atmosphärischen Luft abgegebene Wärmestrahlung zu unterdrücken.

9. Die Anspruch 1 entsprechende Abgasreinigungsvorrichtung, die ferner Folgendes umfasst:
einen Betriebszustanddetektor (14), der konfiguriert ist, um einen Betriebszustand eines Motors (1) zu erkennen; und
ein Additionssteuergerät (13), das zum Steuern einer additiven Durchflussrate der wässrigen Harnstofflösung konfiguriert ist, die von der Einspritzdüse (10) in Reaktion auf den vom Betriebszustanddetektor (14) erkannten Betriebszustand eingespritzt werden soll.

## Revendications

1. Un dispositif pour la purification de gaz d'échappement comprenant :
un convertisseur catalytique réduisant les oxydes d'azote (3) configuré pour réduire et purifier les oxydes d'azote dans un gaz d'échappement, le convertisseur catalytique réduisant les oxydes d'azote (3) étant disposé dans un tuyau d'échappement (2) qui permet au gaz d'échappement de s'écouler du côté en amont vers le côté en aval de celui-ci ;
un élément tubulaire interne (20) disposé sur un côté d'échappement en amont du convertisseur catalytique réduisant les oxydes d'azote (3) tout en laissant un espace libre entre l'élément tubulaire interne (20) et une paroi intérieure du tuyau d'échappement (2), l'élément tubulaire interne (20) ayant des extrémités opposées ouvertes espacées l'une de l'autre dans une direction le long d'un flux du gaz d'échappement ;
une cuve de stockage (4) configurée pour stocker une solution aqueuse d'urée ; et
une buse d'injection (10) configurée pour injecter de manière additive la solution aqueuse d'urée fournie à partir de la cuve de stockage dans la direction le long du flux du gaz d'échappement à l'intérieur de l'élément tubulaire interne (20),
le dispositif pour la purification de gaz d'échappement **caractérisé en ce que** l'élément tubulaire interne (20) est supporté sensiblement concentriquement à l'intérieur du tuyau d'échappement (2) par deux plaques de support (21) dans lequel chacune des plaques de support (21) possède de multiples trous pour permettre au gaz d'échappement de s'écouler au travers du tuyau d'échappement (2) pour s'écouler sur des côtés intérieurs et extérieurs de l'élément tubulaire interne (20).

2. Le dispositif pour la purification de gaz d'échappement selon la revendication 1, comprenant en outre un dispositif de chauffage (11) qui chauffe la solution aqueuse d'urée qui doit être injectée de manière additive à l'intérieur de l'élément tubulaire interne (20).

3. Le dispositif pour la purification de gaz d'échappement selon la revendication 2, dans lequel le dispositif de chauffage (11) chauffe la solution aqueuse d'urée stockée dans la cuve de stockage (4).

4. Le dispositif pour la purification de gaz d'échappement selon la revendication 2, dans lequel le dispositif de chauffage (11) chauffe la solution aqueuse d'urée existante dans une tuyauterie agencée pour fournir une connexion de fluide entre la cuve de stockage (4) et la buse d'injection (10).

5. Le dispositif pour la purification de gaz d'échappement selon la revendication 2, dans lequel le dispositif de chauffage (11) est un chauffage électrique.

6. Le dispositif pour la purification de gaz d'échappement selon la revendication 2, dans lequel le dispositif est appliqué à un moteur (1) possédant le tuyau d'échappement (2), et le dispositif de chauffage chauffe la solution aqueuse d'urée en utilisant un réfrigérant pour refroidir le moteur (1).

7. Le dispositif pour la purification de gaz d'échappement selon la revendication 2, dans lequel le dispositif de chauffage chauffe la solution aqueuse d'urée en utilisant le gaz d'échappement qui a passé au travers du convertisseur catalytique réduisant les oxydes d'azote (3).

8. Le dispositif pour la purification de gaz d'échappement selon la revendication 2, comprenant en outre un isolateur thermique (12) pour la suppression du rayonnement de chaleur de la solution aqueuse d'urée chauffée par le dispositif de chauffage (11) vers un air atmosphérique.

9. Le dispositif pour la purification de gaz d'échappement selon la revendication 1, comprenant en outre :
un dispositif de détection d'état de fonctionnement (14) configuré pour détecter un état de fonctionnement d'un moteur (1) ; et
un dispositif de contrôle d'addition (13) configuré pour contrôler un débit additif de la solution aqueuse d'urée devant être injectée à partir de la buse d'injection (10) en réponse à l'état de fonctionnement détecté par le dispositif de détection d'état de fonctionnement (14).
